# EUROPÄISCHE PATENTSCHRIFT

(11) **EP 2 324 269 B1**
(45) Veröffentlichungstag und Bekanntmachung des Hinweises auf die Patenterteilung: **25.07.2012**
(21) Anmeldenummer: 09778085.2
(22) Anmeldetag: 25.08.2009
(51) Int. Cl.: F16H 57/04, F16H 61/00

(54) **VERFAHREN ZUR HYDRAULISCHEN STEUERUNG EINES INSBESONDERE AUTOMATISCHEN ODER AUTOMATISIERTEN KRAFTFAHRZEUGGETRIEBES**
METHOD FOR THE HYDRAULIC CONTROL OF A MOTOR VEHICLE TRANSMISSION, PARTICULARLY AN AUTOMATIC OR AUTOMATIZED MOTOR VEHICLE TRANSMISSION
PROCEDE POUR LA COMMANDE HYDRAULIQUE DE LA BOITE DE VITESSES NOTAMMENT AUTOMATIQUE OU AUTOMATISEE D'UN VEHICULE A MOTEUR

(30) Priorität: 09.09.2008 DE 102008046350
(43) Veröffentlichungstag der Anmeldung: 25.05.2011
(73) Patentinhaber: Volkswagen Aktiengesellschaft, 38440 Wolfsburg (DE)
(72) Erfinder: NICKE, Dirk, 38114 Braunschweig (DE); RENNECKE, Jörg, 38477 Jembke (DE)
(86) Internationale Anmeldenummer: PCT/EP2009/006139
(87) Internationale Veröffentlichungsnummer: WO 2010/028745

(56) Entgegenhaltungen:
- EP-A1- 1 593 881
- WO-A1-2005/010409
- DE-A1- 3 742 455
- DE-A1- 4 342 784
- DE-A1- 10 113 161
- JP-U- 49 110 368

## Beschreibung

Die Erfindung betrifft ein Verfahren zur hydraulischen Steuerung eines insbesondere automatischen oder automatisierten Kraftfahrzeuggetriebes, insbesondere eines Doppelkupplungsgetriebes, mit einem Hydraulikkreislauf, wobei ein Steuersystem von einem Versorgungssystem mit einem Fluid versorgt wird, wobei das Steuersystem mindestens einen Aktuator zur Steuerung des Kraftfahrzeuggetriebes aufweist und das Versorgungssystem ein Reservoir, eine Fluidpumpe, mindestens eine Filtervorrichtung und mindestens eine stromabwärts der Fluidpumpe angeordnete - erste - Rückführleitung aufweist, wobei das Fluid aus dem Reservoir mit der Fluidpumpe gepumpt wird und das Fluid beim Pumpen mit mindestens der Filtervorrichtung gefiltert wird, wobei die - erste - Rückführleitung ein Druckbegrenzungsventil aufweist, wobei nachdem ein Öffnungsdruck des Druckbegrenzungsventils erreicht wird, das Druckbegrenzungsventil geöffnet wird.

Aus der DE 10 2005 015 911 A1 ist ein Hydraulikkreislauf zur hydraulischen Steuerung eines Doppelkupplungsgetriebes bekannt. Der Hydraulikkreislauf weist dabei ein Steuersystem und ein Versorgungssystem zur Versorgung des Steuersystems mit einem Fluid - hier einem Hydrauliköl - auf. Das Versorgungssystem weist dabei ein Reservoir, eine Fluidpumpe und eine erste Filtervorrichtung auf, wobei die erste Filtervorrichtung als Saugfilter ausgebildet ist. Das Hydrauliköl wird aus dem Reservoir bzw. Tank mit der Fluidpumpe gepumpt, wobei das Hydrauliköl beim Pumpen mit dem der Fluidpumpe vorgeschalteten Saugfilter und einer weiteren, der Fluidpumpe nachgeschalteten, zweiten Filtervorrichtung gefiltert wird. Hiernach wird das Hydrauliköl einem Hauptdruckventil zugeführt, wobei von dem Hauptdruckventil mehrere Hydraulik-Teilkreisläufe mit Aktuatoren abzweigen. Die Hydraulik-Teilkreisläufe bilden dabei das Steuersystem zur Steuerung des Doppelkupplungsgetriebes. Die Aktuatoren werden dabei zum Schalten der Gangstufen und zum Betätigen von zwei Reibkupplungen des Doppelkupplungsgetriebes verwendet. Der Zulauf des Hydrauliköls zu den Hydraulik-Teilkreisläufen erfolgt dabei priorisiert, d. h. das Hauptdruckventil weist eine entsprechende Rangfolgenschaltung zu den einzelnen Hydraulik-Teilkreisläufen auf. Die Fluidpumpe wird hier nur aktiviert, wenn das Steuersystem bzw. die Hydraulik-Teilkreisläufe mit Hydrauliköl versorgt werden.

Es ist ferner ein Hydraulikkreislauf bekannt, wobei das Versorgungssystem eine stromabwärts der Fluidpumpe angeordnete, erste Rückführleitung aufweist. Die erste Rückführleitung weist dabei ein Druckbegrenzungsventil auf, das zum Einstellen eines oberen Grenzwertes eines Systemdruckes dient.

Dieser zuvor genannte Hydraulikkreislauf und das hier realisierte Verfahren sind noch nicht optimal ausgestaltet. Es fließt nur eine begrenzte Menge Hydrauliköl durch die erste Filtervorrichtung Dadurch dauert es eine gewisse Zeit, bevor ggf. eine Verschmutzung nach Inbetriebnahme des Hydraulikkreislaufes wieder herausgefiltert wird.

Im Dokument DE 43 42 784 A1 ist ein Hydraulikkreis mit einer Bypass-Leitung beschrieben, welche der Rückführung eines überschüssigen Teils von Arbeitsöl dient. Die Leitung umfasst ein Ölfilter und geht von einer Stelle zwischen einem Regelventil und einem Drehmomentwandler-Druckregelventil aus und mündet vor dem Regelventil und einer Ölpumpe.

Das Dokument EP 1 593 881 A1 zeigt eine Kühlflüssigkeitsversorgungseinrichtung für ein Doppelkupplungsgetriebe, welche eine Hydropumpe aufweist, welche Hydraulikflüssigkeit von einem offenen Hydraulikflüssigkeitsbehäfter über ein erstes Filter in das Leitungssystem pumpt. Zur Verhinderung einer Anfangsverschmutzung eines Getriebeflüssigkeitskühlers im System ist vorgesehen, ist zu dessen zweitem Filter ein überdruckventil parallel geschaltet.

Aus dem gattungsgemäβen Dokument DE 101 13 161 A1 geht eine Ausführung einer hydraulischen Stelleinrichtung für Handschaltgetriebe hervor, in welcher eine Pumpe für Hydraulikmedium aus einem Tank durch einen Motor permanent angetrieben wird. Des Weiteren ist ein Ventil vorgesehen, das schaltet, wenn das Hydraulikmedium nicht mehr benötigt wird, so dass unnötiges Hydraulikmedium über eine Tankleitung zum Tank zurückbefördert wird.

Im Dokument JP 49 110368 wird ein Hydraulikflüssigkeitsleitungssystem gezeigt, in dem von einem Reservoir mittels einer Pumpe Hydraulikflüssigkeit in die Leitungen gepumpt wird. Es existiert eine Rückführungsleitung mit Filter, welche in der Zufuhrleitung vom Reservoir zur Pumpe mündet.

Das Dokument DE 37 42 455 A1 zeigt einen Schmiermittelkreislauf mit Filter, Die gesamte Ölpumpen-Fördermenge wird permanent einer Filterung unterworfen, so dass der Wirkungsgrad erhöht wird und die Austauschintervalle für das Schmiermittel verlängert werden können.

Im Dokument WO 2005/010409 A1 wird eine hydraulische Schaltungsanordnung mit einer Pumpe und einem Vorratsbehälter beschrieben. Es existiert eine Rückleitung mit Filter zum Vorratsbehälter, wobei parallel zum Filter ein Rückschlagventil verbunden ist.

Der Erfindung liegt daher die Aufgabe zugrunde, ein Verfahren zur hydraulischen Steuerung eines Kraftfahrzeuggetriebes bzw. einen Hydraulikkreislauf zur hydraulischen Steuerung eines Kraftfahrzeuggetriebes derart auszugestalten und weiterzubilden, dass die Verschmutzung des Fluids, insbesondere eines Hydrauliköls, auf einfache und kostengünstige Weise verringert wird.

Die zuvor aufgezeigte Aufgabe wird nun - für das Verfahren - dadurch gelöst, dass auch nachdem der Öffnungsdruck des Druckbegrenzungsventils erreicht wird, mit der Fluidpumpe das Fluid zum Filtern weiterhin gefördert wird, um die Laufzeit der Fluidpumpe künstlich zu erhöhen. Dies hat den Vorteil, dass durch die künstliche Erhöhung der Pumpenlaufzeit die Reinheit des Hydrauliköls durch Erhöhung des Filterdurchsatzes der ersten Filtervorrichtung verbessert ist. Die erste Rückführleitung mit dem Druckbegrenzungsventil wird hier bei der Filterung des Fluids verwendet, indem zum zusätzlichen Filtern das Fluid mit der Fluidpumpe über die erste Rückführleitung zumindest zeitweise zurück in das Reservoir oder in einen zusätzlichen Filterkreislauf gepumpt wird. Der zusätzliche Filterkreislauf kann wiederum in das Reservoir bzw. in den Tank oder Sumpf münden. Insbesondere ist es hier möglich, dass in Zeitphasen, in denen die Aktuatoren im Steuersystem nicht betätigt werden bzw. das Steuersystem nicht von der Fluidpumpe mit dem Fluid versorgt wird, trotzdem das Fluid gefiltert wird, indem mit der Fluidpumpe das Fluid in die Rückführleitung gepumpt wird. In einer konstruktiv besonders einfachen Ausgestaltung kann zum Filtern zumindest zeitweise ein Abschaltdruck der Fluidpumpe höher als ein Öffnungsdruck des Druckbegrenzungsventils gesetzt werden. Der Druck im Fluid wird gemessen - bspw. mit einem Druckmesser - und anschließend wird der gemessene Druck mit einem Abschaltdruck der Fluidpumpe verglichen. Falls der Druck im Fluid höher als der Öffnungsdruck des Druckbegrenzungsventils ist, wird das Druckbegrenzungsventil geöffnet. Der Abschaltdruck der Fluidpumpe kann insbesondere in unkritischen Fahrsituationen auf einen Wert oberhalb des Öffnungsdruckes des Druckbegrenzungsventils gesetzt werden. Dadurch fördert die Fluidpumpe für eine bestimmte Zeit das Fluid durch die erste Filtervorrichtung. Das überschüssige Fluid fließt über das Druckbegrenzungsventil in das Reservoir ab. Hierdurch ist die Pumpenlaufzeit und damit der Filterdurchsatz erhöht. Durch die besondere Schaltung - Erhöhen des Abschaltdruckes über den Öffnungsdruck hinaus - kann die Filterung des Fluids bzw. Hydrauliköls verbessert werden. Diese Ausgestaltung hat ferner den Vorteil, dass die Pumpe relativ kurzfristig, bspw. nur für wenige Minuten zum zusätzlichen Filtern einschaltbar ist. Insbesondere kann die Pumpe eingeschaltet werden, wenn hinreichend bzw. genügend Energie zum zusätzlichen Filtern bereitsteht, wie bspw. bei Autobahnfahrten. Dadurch ergibt sich keine wesentliche Verbrauchserhöhung durch längere Einschaltzeiten der Fluidpumpe. Da insbesondere die Komponenten eines schon bestehenden Hydraulikkreislaufes genutzt werden können, bringt dieses Verfahren auch keinen konstruktiven Mehraufwand, insbesondere keine Gewichtserhöhung mit sich und kann daher kostengünstig realisiert werden. Ferner sind keine weiteren Ventile nötig. Vzw. sind die vorhandenen Ventile bereits so ausgelegt, dass diese einen erhöhten Druck durch das Pumpen - z. B. 80 bar - aushalten können. Auch ist denkbar, das Verfahren insbesondere am Anfang einer Fahrzeuglebensdauer öfter zu verwenden bzw. die zusätzliche Filterfunktion öfter einzuschalten, um ggf. vorhandene Verschmutzungen so schnell wie möglich zu filtern. Während der folgenden Fahrzeuglebensdauer kann dann die zusätzliche Filterfunktion seltener verwendet werden. Die zusätzliche Filterung über die Rückführleitung kann bspw. in Abhängigkeit von der Schaltanzahl, dem Fahrstil oder weiteren Getriebeparametern oder dgl. erfolgen.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden wird nun bevorzugte Ausgestaltung der Erfindung anhand der folgenden Zeichnung und der dazugehörigen Beschreibung näher erläutert. In der Zeichnung zeigt:

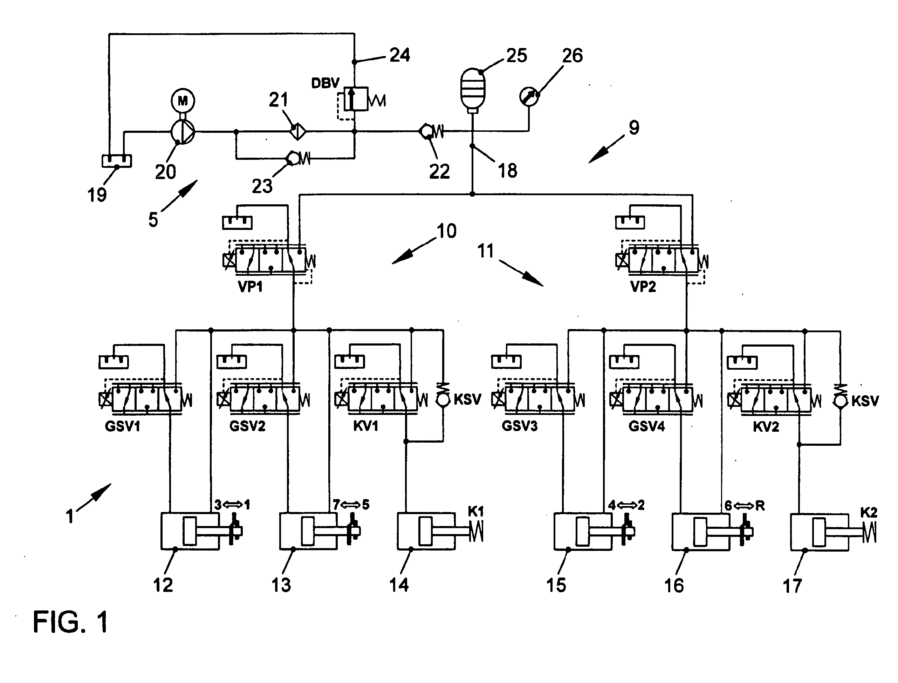

- Fig. 1: in einer schematischen Darstellung einen ersten Hydraulikkreislauf, der zur hydraulischen Steuerung eines insbesondere automatischen oder automatisierten Kraftfahrzeuggetriebes (nicht dargestellt) dient

Das Kraftfahrzeuggetriebe kann insbesondere als Doppelkupplungsgetriebe ausgestaltet sein. Das Doppelkupplungsgetriebe weist insbesondere zwei Teilgetriebe auf. Das Doppelkupplungsgetriebe weist ferner eine Doppelkupplung mit zwei Reibkupplungen auf. Das Doppelkupplungsgetrlebe kann insbesondere sieben Vorwärtsgänge und einen Rückwärtsgang aufweisen. Dem einen Teilgetriebe können dabei die Gänge 1, 3, 5 und 7 und dem anderen Teilgetriebe die Gänge 2, 4, 6 und der Rückwärtsgang zugeordnet sein.

Wie in der Fig. 1 gut zu erkennen ist, weist der Hydraulikkreislauf 1 ein Versorgungssystem 5, der Hydraulikkreislauf 2 ein Versorgungssystem 6, der Hydraulikkreislauf 3 ein Versorgungssystem 7 und der Hydraulikkreislauf 4 ein Versorgungssystem 8 auf.

Jeder der Hydraulikkreisläufe 1 bis 4 weist ferner ein Steuersystem 9 auf, das von dem jeweiligen Versorgungssystem 5, 6, 7 bzw. 8 mit einem Fluid versorgt wird. Als Fluid wird vzw. ein Hydrauliköl verwendet.

Die Steuersysteme 9 der Hydraulikkreisläufe 1 bis 4 sind hier im Wesentlichen gleich ausgestallet. Die einzelnen Versorgungssysteme 5, 6, 7 und 8 sind unterschiedlich ausgestaltet. Es darf hier zunächst auf die baugleichen Steuersysteme 9 eingegangen werden, bevor die einzelnen Versorgungssysteme 5 bis 8 und anschließend dann deren Unterschiede erläutert werden.

Das Steuersystem 9 weist jeweils zwei Teilsysteme - ein erstes Teilsystem 10 und ein zweites Teilsystem 11 - zur Steuerung der zwei Teilgetriebe (nicht dargestellt) des Doppelkupplungsgetriebes auf. Jedem der beiden Teilgetriebe ist einer der beiden Teilsysteme 10 bzw. 11 zugeordnet. Die beiden Teilsysteme 10, 11 werden gemeinsam von jeweils einem Versorgungssystem 5, 6, 7 oder 8 mit dem Fluid versorgt. Das Steuersystem 9 weist jeweils mindestens einen Aktuator 12, 13, 14, 15, 16 und 17 zur Steuerung des Kraftfahrzeuggetriebes mit dem nicht dargestellten Fluid auf. Die Aktuatoren 12, 13, 15 und 16 sind jeweils einer nicht näher bezeichneten Schaltgabel oder Schiebemuffe zugeordnet, wobei der Aktuator 12 eine den Gängen 1 und 3 zugeordnete Schaltgabei, der Aktuator 13 eine den Gängen 7 und 5 zugeordnete Schaltgabel, der Aktuator 15 eine den Gängen 4 und 2 zugeordnete Schaltgabel und der Aktuator 16 eine dem sechsten Gang und dem Rückwärtsgang R zugeordnete Schaltgabel betätigt. Die Aktuatoren 12, 13, 15, und 16 sind als doppeltwirkende Zylinder ausgestaltet. Der Aktuator 14 ist einer ersten Reibkupplung K1 und der Aktuator 17 ist einer zweiten Reibkupplung K2 zugeordnet. Die Aktuatoren 12, 13 und 14 sind dem ersten Teilsystem 10 und die Aktuatoren 15, 16 und 17 sind dem zweiten Teilsystem 11 zugeordnet.

Das Steuersystem 9 weist vzw. mindestens ein Volumenstromventil pro Aktuator 12, 13, 14, 15, 16 und 17 auf. Als Volumenstromventil ist hier ein erstes Gangstellerventil GSV1 vorgesehen, das dem ersten Aktuator 12 zugeordnet ist, ein zweites Gangstellerventil GSV2, das dem Aktuator 13 zugeordnet ist, ein Kupplungsventil KV1, das dem Aktuator 14 zugeordnet ist, ein Gangstellerventil GSV3, das dem Aktuator 15 zugeordnet ist, ein Gangstellerventil GSV4, das dem Aktuator 16 zugeordnet ist und ein Kupplungsventil KV2, das dem Aktuator 17 zugeordnet ist. Den Gangstellerventilen GSV1, GSV2 und dem Kupplungsventil KV1 des ersten Teilsystems 10 ist ein Vorsteuerventil VP1 vorgeschaltet- Den Gangstellerventilen GSV3, GSV4 und dem Kupplungsventil KV2 des zweiten Teilsystems 11 ist entsprechend ein Vorsteuerventil VP2 vorgeschaltet. Parallel zu den Kupplungsventilen KV1 und KV2 des jeweiligen Teilsystems 10 bzw. 11 ist ein Kupplungsrückschlagventil KSV parallel geschaltet. Das Steuersystem 9 bzw. die beiden Teilsysteme 10, 11 werden über eine gemeinsame Verbindungsleitung 18 aus dem jeweiligen Versorgungssystem 5, 6, 7 bzw. 8 gespeist.

Das Versorgungssystem 5, 6, 7 bzw. 8 versorgt das Steuersystem 9 mit dem Fluid aus einem Reservoir 19. Das Fluid ist aus dem Reservoir 19 mit einer Fluidpumpe 20 pumpbar. Das Fluid wird beim Pumpen mit einer ersten Filtervorrichtung 21 gefiltert. Die Filtervorrichtung 21 wird hier von einem Filter (nicht näher bezeichnet) gebildet.

Das Versorgungssystem 5, 6, 7, 8 weist ein stromabwärts zur Fluidpumpe 20 angeordnetes, erstes Rückschlagventil 22 auf. Mit dem ersten Rückschlagventil 22 wird ein Druckverlust im Steuersystem 9 verhindert und ein unterer Grenzwert für einen Systemdruck vorgegeben. Parallel geschaltet zur ersten Filtervorrichtung 21 ist ein zweites Rückschlagventil 23 vorgesehen. Das zweite Rückschlagventil 23 bzw. dessen Leistung zweigt dabei zwischen der Fluidpumpe 20 und der ersten Filtervorrichtung 21 ab und mündet zwischen der ersten Filtervorrichtung 21 und dem ersten Rückschlagventil 22. Dieses die erste Filtervorrichtung 21 überbrückende Rückschlagventil 23 schützt die erste Filtervorrichtung 21 vor zu hohen Druckbelastungen.

Die Versorgungssysteme 5, 6, 7 und 8 weisen jeweils eine erste Rückführleitung 24 auf. Die erste Rückführleitung 24 zweigt zwischen der ersten Filtervorrichtung 21 und dem ersten Rückschlagventil 22 ab und mündet hier in das Reservoir 19.

Der ersten Rückführleitung 24 ist ein Druckbegrenzungsventil DBV zugeordnet. Das Druckbegrenzungsventil DBV ist hier als steuerbares Druckbegrenzungsventil DBV ausgebildet. Ein Öffnungsdruck des Druckbegrenzungsventils DBV bestimmt im Allgemeinen eine Obergrenze für den Systemdruck im Steuersystem 9. Im normalen Betrieb dient das Druckbegrenzungsventil DBV und die Rückführleitung 24 dazu, den bereitgestellten Systemdruck des Fluids zu regeln bzw. zu steuern. Das Druckbegrenzungsventil DBV wird geöffnet, wenn der Druck im Fluid über einen bestimmten Öffnungsdruck steigt.

Die Versorgungssysteme 5, 6, 7 bzw. 8 weisen vzw. jeweils eine Druckspeichervorrichtung 25 insbesondere stromabwärts des Rückschlagventils 22 auf, um den Systemdruck ohne ständiges Fördern der Fuidpumpe 21 im Steuersystem 9 aufrecht zu erhalten. Die Druckspeichervorrichtung 25 ist stromabwärts der Fluidpumpe 20, insbesondere stromabwärts der ersten Filtervorrichtung 21 angeordnet. Der Druck, mit dem das Fluid aus dem Versorgungssystem 5 bis 8 austritt, ist mit einem Druckmesser 26 messbar. Der Druckmesser 26 ist vzw. stromabwärts des Rückschlagventils 22 angeordnet. Die Fluidpumpe 20 ist insbesondere steuerbar ausgebildet. Die Fluidpumpe 20 wird mit einem Motor M angetrieben.

Die eingangs beschriebenen Nachteile sind - für das Verfahren - nun dadurch vermieden, dass auch nachdem der Öffnungsdruck des Druckbegrenzungsventils DBV erreicht wird, mit der Fluidpumpe 20 das Fluid zum Filtern weiterhin gefördert wird, um die Laufzeit der Fluidpumpe 20 künstlich zu erhöhen. Dies hat den Vorteil, dass der Filterdurchsatz der Fluidpumpe 20 erhöht ist, wodurch die Reinheit des Hydrauliköls bzw. des Fluids verbessert ist. Das Fluid wird schneller gereinigt und eine bessere Funktionalltät der hydraulischen Bauteile direkt nach der Inbetriebnahme ist gewährleistet. Hierdurch ist für den Kunden bzw. den Benutzer eines entsprechenden Kraftfahrzeuggetriebes der Komfort erhöht. Durch dieses Verfahren können die durch die Bewegung der Bauteile in einer Mechatronic entstehenden Schmutzpartikel durch die erste Filtervorrichtung 21 zeitnah wieder aus dem Fluid herausgefiltert werden.

Es können hier vor allem die Zeiträume zum Filtern genutzt werden, in denen keine zusätzlichen Schmutzpartikel entstehen. Die Fluidpumpe 20 kann hier Fluid fördern, ohne dass eine Bewegung an verschleißenden Bauteilen insbesondere des Steuersystems 9 stattfindet. Voraussetzung für die Verbesserung der Reinheit des Fluids ist ein entsprechender Aufnahmekapazitätsüberschuss der Versorgungssysteme 5 bis 8. Insbesondere in unkritischen Fahrsituationen kann zumindest zeitweise der Abschaltdruck der Fluidpumpe 20 höher als der Öffnungsdruck des Druckbegrenzungsventils DBV gesetzt werden. Dadurch fördert die Fluidpumpe 20 in diesen Fahrsituationen das Fluid durch die erste Filtervorrichtung 21. Das überschüssige Fluid fließt über das Druckbegrenzungsventil DBV und über die erste Rückführleitung 24 in das Reservoir 19 ab (vgl. Fig. 1).

Vzw. sind die Vorsteuerventile VP1 und VP2 im Steuersystem 9 so ausgestaltet, dass sie den erhöhten Abschaltdruck von z. B. 80 bar aushalten können. Durch die Erhöhung des Abschaltdruckes der Fluidpumpe 20 über den Öffnungsdruck des Druckbegrenzungsventils DBV hinaus, wird eine zusätzliche Filterfunktion des Versorgungssystems 5 bereitgestellt.

### Bezugszeichenliste

- 1: Hydraulikkreislauf
- 2: Hydraulikkreislauf
- 3: Hydraulikkreislauf
- 4: Hydraullkkrelslauf
- 5: Versorgungssystem
- 6: Versorgungssystem
- 7: Versorgungssystem
- 8: Versorgungssystem
- 9: Steuersystem
- 10: Teilsystem
- 11: Teilsystem
- 12: Aktuator
- 13: Aktuator
- 14: Aktuator
- 15: Aktuator
- 16: Aktuator
- 17: Aktuator
- 18: Verbindungsleitung
- 19: Reservoir
- 20: Fluidpumpe
- 21: Filtervorrichtung
- 22: Rückschlagventil
- 23: Rückschlagventil
- 24: Rückführleitung
- 25: Druckspeichervorrichtung
- 26: Druckmesser
- 27: Rückführleitung
- 28: Rückführleitung
- 29: Rückführleitung
- 30: Filterkreislauf
- 31: Ventil
- 32: Drosselventil
- 33: Fluidpumpe
- 34: Filtervorrichtung

- R: Rückwärtsgang
- K1: Reibkupplung
- K2: Reibkupplung
- GSV1: Gangstellerventil
- GSV2: Gangstellerventil
- GSV3: Gangstellerventil
- GSV4: Gangstellerventil
- KV1: Kupplungsventil
- KV2: Kupplungsventil
- VP1: Vorsteuerventil
- VP2: Vorsteuerventil
- KSV: Kupplungsrückschlagventil
- DBV: Druckbegrenzungsventil
- M: Motor

## Patentansprüche

1. Verfahren zur hydraulischen Steuerung eines Kraftfahrzeuggetriebes s, mit einem Hydraulikkreislauf (1), wobei ein Steuersystem (9) von einem Versorgungssystem (5) mit einem Fluid versorgt wird, wobei das Steuersystem (9) mindestens einen Aktuator (12, 13, 14, 15, 16, 17) zur Steuerung des Kraftfahrzeuggetriebes aufweist und das Versorgungssystem (5, 6, 7, 8) ein Reservoir (19), eine Fluidpumpe (20), mindestens eine Filtervorrichtung (21) und mindestens eine stromabwärts der Fluidpumpe (20) angeordnete - erste - Rückführleitung (24, 27, 28, 29) aufweist, wobei das Fluid aus dem Reservoir (19) mit der Fluidpumpe (20) gepumpt wird und das Fluid beim Pumpen mit der Filtervorrichtung (21) gefiltert wird, wobei eine - erste - Rückführleitung (24) ein Druckbegrenzungsventil (DBV) aufweist, wobei nachdem ein Öffnungsdruck des Druckbegrenzungsventils (DBV) erreicht wird, das Druckbegrenzungsventil (DBV) geöffnet wird und auch nachdem der Öffnungsdruck des Druckbegrenzungsventils (DBV) erreicht wird, mit der Fluidpumpe (20) das Fluid zum Filtern weiterhin gefördert wird, um die Laufzeit der Fluidpumpe (20) künstlich zu erhöhen, **dadurch gekennzeichnet, dass** ein Druck im Fluid gemessen wird, der gemessene Druck mit einem Abschaltdruck der Fluidpumpe (20) verglichen wird, der Druck mit einem Öffnungsdruck des der - ersten - Rückführleitung (24) zugeordneten Druckbegrenzungsventils (DBV) verglichen wird, wobei das Druckbegrenzungsventil (DBV) geöffnet wird, wenn der Druck im Fluid höher als der Öffnungsdruck ist, wobei zum zusätzlichen Filtern zumindest zeitweise der Abschaltdruck der Fluidpumpe (20) höher als der Öffnungsdruck des Druckbegrenzungsventils (DBV) gesetzt wird.

2. Verfahren nach Anspruch 1, **dadurch gekennzeichnet, dass** in Zeitphasen, in denen die Aktuatoren (12, 13, 14, 15, 16, 17) nicht betätigt werden, mit der Fluidpumpe (20) das Fluid zeitweise in mindestens die - erste - Rückführleitung (24) gepumpt wird, insbesondere auch die Pumpenfördermenge durch Drehzahlerhöhung der Fluidpumpe (20) erhöht wird.

3. Verfahren nach Anspruch 1 oder 2, **dadurch gekennzeichnet, dass** das Kraftfahrzeuggetriebe ein automatisches oder ein automatisiertes Kraftfahrzeuggetriebe und/oder ein Doppelkupplungsgetriebe ist.

## Claims

1. Method for the hydraulic control of a motor vehicle transmission s, with a hydraulic circuit (1), a control system (9) being supplied with a fluid by a supply system (5), the control system (9) having at least one actuator (12, 13, 14, 15, 16, 17) for controlling the motor vehicle transmission, and the supply system (5, 6, 7, 8) having a reservoir (19), a fluid pump (20), at least one filter device (21) and at least one first return line (24, 27, 28, 29) arranged downstream of the fluid pump (20), the fluid being pumped out of the reservoir (19) by means of the fluid pump (20), and the fluid, when pumped, being filtered by means of the filter device (21), a first return line (24) having a pressure-limiting valve (DBV), and, after an opening pressure of the pressure-limiting valve (DBV) is reached, the pressure-limiting valve (DBV) being opened, and also after the opening pressure of the pressure-limiting valve (DBV) is reached, the fluid continuing to be conveyed by means of the fluid pump (20) for filtering, in order artificially to increase the running time of the fluid pump (20), **characterized in that** a pressure in the fluid is measured, the measured pressure is compared with a cut-off pressure of the fluid pump (20), and the pressure is compared with an opening pressure of the pressure-limiting valve (DBV) assigned to the first return line (24), the pressure-limiting valve (DBV) being opened when the pressure in the fluid is higher than the opening pressure, and, for additional filtering, the cut-off pressure of the fluid pump (20) being at least temporarily set higher than the opening pressure of the pressure-limiting valve (DBV).

2. Method according to Claim 1, **characterized in that**, in time phases in which the actuators (12, 13, 14, 15, 16, 17) are not actuated, the fluid is temporarily pumped into at least the first return line (24) by means of the fluid pump (20), in particular the pump delivery rate is also increased by increasing the rotational speed of the fluid pump (20).

3. Method according to Claim 1 or 2, **characterized in that** the motor vehicle transmission is an automatic or automated motor vehicle transmission and/or a dual clutch transmission.

## Revendications

1. Procédé pour la commande hydraulique d'une boîte de vitesses s d'un véhicule automobile, comprenant un circuit hydraulique (1), un système de commande (9) étant alimenté en fluide par un système d'alimentation (5), le système de commande (9) présentant au moins un actionneur (12, 13, 14, 15, 16, 17) pour la commande de la boîte de vitesses du véhicule automobile, et le système d'alimentation (5, 6, 7, 8) présentant un réservoir (19), une pompe à fluide (20), au moins un dispositif de filtre (21) et au moins une première conduite de retour (24, 27, 28, 29) disposée en aval de la pompe à fluide (20), le fluide étant pompé hors du réservoir (19) avec la pompe à fluide (20) et le fluide, lors du pompage, étant filtré avec le dispositif de filtre (21), une première conduite de retour (24) présentant une soupape de limitation de pression (DBV), et après qu'une pression d'ouverture de la soupape de limitation de pression (DBV) a été atteinte, la soupape de limitation de pression (DBV) étant ouverte et après que la pression d'ouverture de la soupape de limitation de pression (DBV) a été atteinte, le fluide étant en outre aussi.refoulé avec la pompe à fluide (20) afin d'augmenter artificiellement la durée de travail de la pompe à fluide (20), **caractérisé en ce qu'**une pression est mesurée dans le fluide, la pression mesurée est comparée avec une pression de coupure de la pompe à fluide (20), la pression est comparée avec une pression d'ouverture de la soupape de limitation de pression (DBV) associée à la première conduite de retour (24), la soupape de limitation de pression (DBV) étant ouverte lorsque la pression dans le fluide est supérieure à la pression d'ouverture, la pression de coupure de la pompe à fluide (20) étant réglée de manière à être supérieure, au moins temporairement, à la pression d'ouverture de la soupape de limitation de pression (DBV) en vue d'un filtrage supplémentaire.

2. Procédé selon la revendication 1, **caractérisé en ce que** dans des phases temporelles dans lesquelles les actionneurs (12, 13, 14, 15, 16, 17) ne sont pas activés, le fluide est pompé avec la pompe à fluide (20) temporairement au moins dans la première conduite de retour (24), notamment la quantité refoulée par la pompe est aussi augmentée par augmentation du régime de la pompe à fluide (20) .

3. Procédé selon la revendication 1 ou 2, **caractérisé en ce que** la boîte de vitesses du véhicule automobile est une boîte de vitesses automatique ou automatisée et/ou une boîte de vitesses à double embrayage.
